# EUROPEAN PATENT SPECIFICATION

(11) **EP 4 428 072 B1**
(45) Date of publication and mention of the grant of the patent: **01.07.2026**
(21) Application number: 23382205.5
(22) Date of filing: 06.03.2023
(51) Int. Cl.: B65G 69/34, B65G 69/00, B60T 3/00

(54) **VEHICLE BLOCKING SYSTEM**
BLOCKIERSYSTEM FÜR EIN FAHRZEUG
SYSTÈME DE BLOCAGE DE VÉHICULE

(43) Date of publication of application: 11.09.2024
(73) Proprietor: Signos New Technologies, S.L., 50018 Zaragoza (ES)
(72) Inventor: ÁVILA VICIOSO, Jorge, 50018 ZARAGOZA (ES)
(74) Representative: Isern Patentes y Marcas S.L.

(56) References cited:
- JP-A- 2024 001 442
- US-A1- 2020 216 276
- US-B2- 11 285 932

## Description

### OBJECT OF THE INVENTION

The present invention can be included within the transport sector, in particular, the loading and unloading of goods transport vehicles. More specifically, the object of the invention relates to a vehicle blocking system, for docks, as well as for loading and unloading goods, and also for general purposes, under circumstances of legally imposed locking in the event of an arrest.

### BACKGROUND OF THE INVENTION

Loading and unloading docks for transport vehicles are among the most dangerous places in commercial operations, since vehicles with their trailers must manoeuvre outside the loading dock in confined spaces and having poor visibility. Moreover, the lifting platforms or forklifts move to and from the loading dock, also in limited spaces and having reduced visibility. During the loading and unloading operations of transport vehicles at the docks, the operators must carry out a series of tasks to secure the vehicles in order to avoid accidents during the loading operations thereof. The loading and unloading dock area requires certain safety conditions to avoid accidents, not only for operators, but also for maintenance personnel and all those external users who are close to the loading point. A dangerous situation can occur when a trailer unexpectedly moves away from the loading dock due to failure of the trailer's or the transport vehicle's securing systems, which can cause the forklift to fall into the gap generated between the dock and the driveway to the trailer of the transport vehicle when the trailer moves unexpectedly, in almost all cases it involves the forklift falling approximately 1.20 m below the door.

In such a situation, the forklift operator can be seriously injured or, even worse, a portion of the forklift can fall on the driver, causing a fatal crushing injury.

Numerous safety measures have been implemented to reduce the chances of accidents, such as standards outlining the requirements for restraint devices or wheel chocks on the transport vehicle or trailer. The regulations require drivers to brake and operators to block the rear tires of trucks before loading or unloading. If a driver separates a trailer from its truck, either said the driver or the site workers receiving the trailer must stabilize the trailer with wheel stops or chocks or other recognized stabilization methods.

Ensuring that blocking or containment devices, for example a chock, are in the correct position is one of the essential tasks in these operations. An incorrect positioning of the blocking or containment device could cause the vehicle or trailer to be unintentionally displaced with the consequent risk of accidents for people, vehicles and even goods that are handled on the dock.

Therefore, there is a need to implement technological solutions to warn personnel that the transport vehicle is in the correct and secured position to start the loading operation of the vehicle at a loading dock, all efficiently and safely, and that they provide complete information remotely about the safety status at the dock for authorized persons and also for vehicles and merchandise during loading operations.

Document US11285932B2 (RITE HITE HOLDING) discloses vehicle blocking systems according to the preamble of independent claim 1.

### BRIEF DESCRIPTION OF THE INVENTION

The present invention relates to a vehicle blocking system, comprising:
i- a blocking device, such as a chock, intended to be arranged against a wheel of the vehicle or of a trailer, for blocking displacement of said vehicle
ii- a plurality of sensors, located inside the blocking device, and comprising:
   - at least one distance sensor for measuring distance parameters between the blocking device and the wheel, and wherein the sensors are configured to send data related to said parameters;
   - at least one position sensor, such as an accelerometer, for measuring position, horizontality and movement parameters of the blocking device;
   - at least one orientation sensor, for measuring orientation parameters of the blocking device
iii- a wide area wireless communication network, optionally selected from LoRaWAN, NB-IoT, satellite NB-loT, Narrow Band, LTE, etc., configured to transmit data from said plurality of sensors,
iv- a remote receiver, to receive the data from the sensors sent through the communication network.
v- a control unit, in communication with the receiver, and programmed to perform an evaluation of whether the data of the parameters received by the receiver are inside or outside of predetermined ranges, as well as to provide a response based on said evaluation
vi- a user interface, for communicating to an operator the result of the evaluation and
vii- an electrical power supply for powering the sensors and the communication network.

By means of the vehicle blocking system of the present invention, it is possible to remotely obtain information in real time about the wheel blocking device, reporting correct installation thereof at all times, offering a greater degree of safety in loading and unloading operations in the dock for people, vehicles and goods.

Various preferred embodiments are contemplated, as will be explained later, depending on aspects such as the ranging characteristics of the communication network used, the established control actions, etc.

### BRIEF DESCRIPTION OF THE DRAWINGS

Other features and advantages of the blocking system object of the present invention will be evident in light of the description of a preferred, but not exclusive, embodiment which is illustrated by way of a non-limiting example in the drawings which are attached, wherein:
FIGURE 1. It shows a schematic view of a goods transport vehicle immobilized by means of a wheel blocking device in a loading and unloading dock according to the present invention.
FIGURE 2. It shows a general perspective view of a conventional wheel blocking device.
FIGURE 3. It shows a front view of the contact face for contacting the running surface of a wheel in a wheel blocking device according to the present invention including a distance sensor.
FIGURE 4. It shows a lower view of the support base of a wheel blocking device according to the present invention including an accelerometer.
FIGURE 5. It shows a rear view of a wheel blocking device according to the present invention including a battery pack.
FIGURE 6. It shows a schematic view of the vehicle blocking system according to the present invention using the LoRaWAN network protocol.
FIGURE 7. It shows a schematic view of the vehicle blocking system according to the present invention using the NB-loT network protocol.
Figure 8. It shows a perspective view where a compact configuration of a module is illustrated, housed in the blocking device, integrating the power supply, the sensors and LED alarm lights.

### DESCRIPTION OF A PREFERRED EMBODIMENT

The present invention provides a vehicle blocking system (1) comprising a locking device (8), such as a chock (8), to block a wheel (6) of a vehicle (1) or trailer (2), wherein the blocking device (8) incorporates a plurality of wireless sensors (10, 11, 12) located in said blocking device (8), the sensors (10, 11, 12) being configured to measure a plurality of parameters, and send data in relation to said parameters, and is in wireless communication with a data transmission network that uses low-power wide area network (LPWAN) technologies such as LoRaWAN, NB-loT, satellite NB-loT, Narrow Band and LTE, to transmit the information from the sensors to a remote receiver, wherein the sensor data is evaluated, to determine whether the blocking device (8) is correctly located, with respect to the vehicle (1).

In accordance with the foregoing, the vehicle blocking system incorporates IoT (Internet of Things) control and communications elements that provide monitoring, control and alarm functionalities through the following set of components:
i- a blocking device (8), for example a chock (8), intended to be arranged in contact with one of the wheels (6) of the vehicle (1) for blocking displacement of said vehicle (1);
ii- a plurality of sensors (10, 11, 12) comprising:
   - position sensors (11), which measure position, horizontality and movement parameters of the blocking device (8) (such as an accelerometer);
   - orientation sensors (12), which measure orientation parameters of the blocking device (8) (such as a digital compass); and
   - distance sensors (10), which measure distance parameters between the blocking device (8) and the wheel (6) of the vehicle (1) or trailer (2), said sensors (10, 11, 12) being contained in the blocking device (8) and configured to send data in relation to said measured parameters;
iii- a wide area wireless communication network (Wide Area Network, WAN), such as LoRaWAN, NB-loT with or without satellite, Narrow Band, LTE, configured to transmit the data sent by said plurality of sensors (10, 11, 12);
iv- a receiver (13), to receive the data from the sensors (10, 11, 12) sent through the communication network;
v- a control unit, in communication with the receiver (13), and programmed to perform an evaluation of whether the measurement values of the sensors (10, 11, 12) received by the receiver (13) are inside or outside of predetermined ranges, as well as to provide a response based on said evaluation (alarm of incorrect installation of the blocking device (8), permission for personnel access to the loading and unloading docks) based on the information received from the sensors (10, 11, 12),
vi- a user interface, to communicate to an operator the result of the evaluation, either to show the answers and/or to receive inputs from the user; and
vii- a power source (9), such as batteries, for example, lithium batteries, or solar panels, to power the sensors (10, 11, 12) and the communication network.

By means of the vehicle blocking system of the present invention, it is possible to remotely obtain information in real time on the arrangement of the blocking device (8), reporting its correct installation at all times to disable the unintentional displacement of a transport vehicle (1), offering a greater degree of safety in loading and unloading operations at the dock (3) both for people, as well as for vehicles (1) and goods.

Additionally, the use of low consumption wide area networks makes it possible to validate the placement of the blocking device (8) in any geographical location.

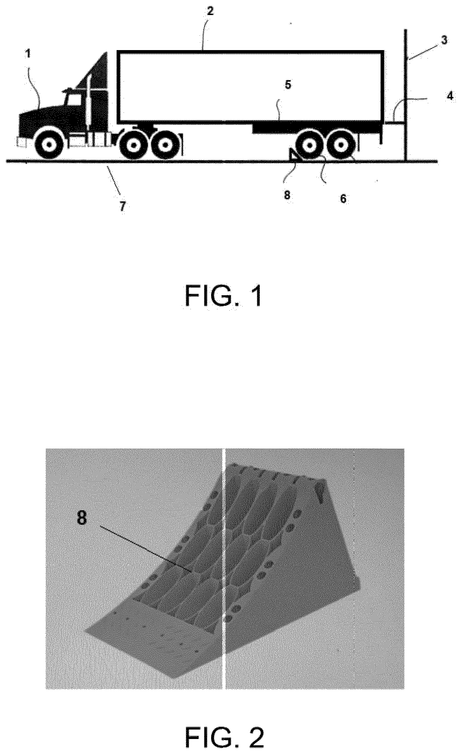

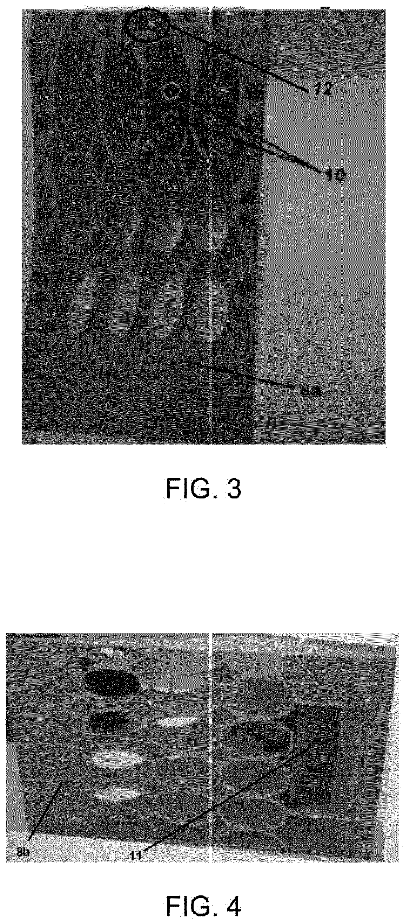

The invention will now be described with reference to figures 1 to 8, wherein several non-limiting embodiments are shown.

Figure 1 shows a schematic view of the position of a transport vehicle (1), equipped with a conventional trailer (2), having a box (5), parked on a platform (7) of a dock (3) for loading and unloading of goods. The rear loading doors of the trailer (2) are connected to the dock (3) by means of a dock leveller (4), also called a "dock bridge (4)" which extends between the dock (3) and the box (5) of the trailer (2). The wheels (6), such as the rear wheels (6) of the vehicle (1), are blocked by means of a blocking device (8), also called a "chock (8)" that is installed in the opposite direction to the direction of advance of the vehicle (1) and is in contact with the running surface of said wheel (6) thus preventing the movement of the vehicle (1) in a predetermined direction.

The blocking device (8) has a main body exhibiting: a front contact face (8A) configured to be in contact with the running surface of a wheel (6) of a transport vehicle (1) or its trailer (2) and pick up the weight thereof; a support base (8B); a rear face (8C) and lateral faces (not shown).

The front face (8A) preferably forms an angle with respect to the horizontal, for example, between 10 and 45° or exhibits a concave curved surface, to be suited to the shape of the wheel (6). In a preferred embodiment, the contact face (8A) of the blocking device (8) is configured to be suited to the curvature and shape of the running surface of the wheel (6) of the vehicle (1) or trailer (2). In such a case, the blocking device (8) can exhibit different dimensions to be conveniently suited to the different tire treads for wheels (6) of vehicles (1) or trailers (2).

In a preferred embodiment of the invention, the blocking device (8) is a conventional chock made, for example, of high-density plastic material, aluminium, steel, or wood.

On the front face (8A) there is a distance sensor (10), also called "distance transducer" or "linear position transducer", which allows linear position measurement, linear distance measurement or measurement of the linear displacement of an object. Preferably, the distance sensor (10) is selected from infrared sensors (IR) or ultrasound sensors (US). In an even more preferred embodiment of the invention, the distance sensor (10) is an ultrasound sensor.

By means of said distance sensor (10) it is possible to measure the distance between the wheel (6) of the vehicle (1) and the contact surface of the front face (8A) of the blocking device (8), so that, if under any circumstances, the wheel (6) of the vehicle (1) stops making contact with said front face (8A), the distance sensor (10) detects that said distance is outside a previously established distance range and said data will be transmitted through the wide area communications network to the receiver (13), the control unit of which is programmed to provide a response based on the data received, and through the user interface of which an operator can display this piece of data in real time and take the actions required to warn that the blocking device (8) is not correctly installed. These actions may include, among others, preventing the personnel responsible for loading and unloading operations from entering the dock (3) area through the authorised access until the blocking device (8) has been correctly installed, for example, preventing the opening of an access gate or physical barrier, and/or issuing a visual and/or audible alarm, through the corresponding signaling means, connected to the sensors (10, 11, 12), generally wirelessly, although if the signaling means are part of the blocking device (8), same can be connected to the sensors (10, 11, 12) both wirelessly and by means of cables. These actions can be automatically executed by the programmed control unit in response to the information received from the sensors (10, 11, 12). The signaling means can be included in the blocking device (8), although they can also be, alternatively or additionally, external to said blocking device (8).

On the support base (8B) of the blocking device (8) there is a position sensor (11) that measures both position parameters, as well as horizontality and movement parameters of the blocking device (8), wherein said position sensor (11) is preferably an accelerometer (11) the function of which is to detect that the blocking device (8) has its support base (8A) placed on the ground, in order to guarantee that, in the event of movement of the vehicle (1), the blocking device (8) picks up the weight of said vehicle (1) on the surface configured for that purpose, in other words, the front face (8A) of the blocking device, and not another.

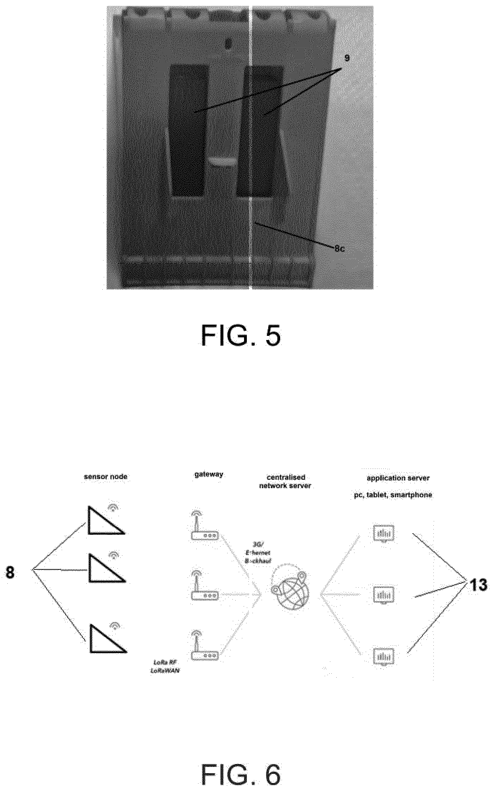

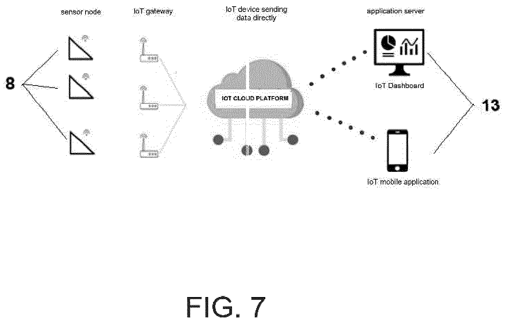

By incorporating a position sensor (11), such as an accelerometer (11), in the support base (8B) of the blocking device (8), it is possible to monitor in real time the movements of installation or uninstallation of the blocking device (8). This information is sent by said position sensor (11) and transmitted through the aforementioned communications network, to the receiver (13), which can be configured as a control panel, a personal computer, a tablet or a smartphone (see Figures 6 and 7).

In this way, the correct placement of the blocking device (8) can be remotely monitored in real time. Additionally, an incorrect placement of the blocking device (8) can trigger a visual or audible alarm signal that can be displayed through a user interface by an operator located in a remote location. For this, signaling means (not represented), whether visual or audible, can be included to warn about the correct or incorrect installation of the blocking device (8) where said display means are wirelessly connected to the sensors (10, 11, 12).

In another embodiment of the invention, the blocking device (8) can optionally include signaling means connected to the distance (10), position (11) or orientation (12) sensors to warn that the installation of the blocking device (8) is incorrect. These signals can be luminous (for example, with a colour indication: green correct position, red incorrect position) or audible, for example, a horn.

Likewise, the movement sensor (11), such as the accelerometer (11), makes it possible to obtain information on the installation manoeuvres of said blocking device (8) and to optimize the time spent in carrying out said manoeuvres. Therefore, it is possible, based on the information obtained from the blocking system of the present invention, to optimize the overall times spent in loading and unloading operations at docks (3), in addition to reducing the risks of accidents.

Additionally, the blocking device (8) includes an orientation sensor (12), such as a digital compass (12), preferably located in a portion visible to the naked eye for the operator who is performing the installation. Said orientation sensor (12) makes it possible to determine that the front face (8A) of the blocking device (8), the surface of which picks up the weight of the vehicle (1), is arranged in the opposite direction to the direction of advance of the vehicle (1).

In this way, the operator performing the tasks of installing the blocking device (8) receives permanent information on the correct installation of the blocking device (8) with respect to the vehicle.

Optionally, the blocking device (8) can include a GPS module to detect its location, either en route, or within an area of dock (3) operations.

For the transmission of the information measured by the wireless sensors (10, 11, 12) located in the blocking device (8), the communication networks used are wide area networks (LPWAN), preferably low consumption, such as preferably, LoRaWAN, NB-IoT or satellite NB-loT (Figures 6 and 7), as well as Narrow Band and LTE type networks.

LoRaWAN is a type of communication protocol of the Low Power Wide Area Networks (LPWAN) type, the network-level communication protocol using the LoRa physical layer. The LoRa protocol is a wireless technology that uses a Spread Spectrum modulation. The use of this type of modulation allows a better tolerance to noise and thus reaching long distances with a very low energy consumption. LoRa is the protocol at the physical layer level.

The use of LoRa technology allows data to be transmitted over a distance between about 3 km in areas of high building density up to 20 km in open areas such as rural areas. Also, the LoRa protocol has the advantage of low power consumption. This is an important aspect, in accordance with the present invention, since it allows a significant number of devices with very small batteries to be coupled that do not require any type of intervention for years. These devices are economical with a very low maintenance cost.

These characteristics are what make LoRa a suitable protocol for the purposes of the present invention where sensors must be connected.

Another wide area network alternative in accordance with the present invention is NB-loT (Narrow Band Internet of Things), which is a data transmission standard intended to allow devices to operate on mobile operator networks. This technology uses low-bandwidth signals to communicate with existing GSM and LTE technologies.

NB-IoT uses a physical layer of signals and channels that meets the coverage requirements of hard-to-reach areas such as rural areas or deep interiors, while keeping devices simple. Furthermore, NB-loT can work with 2G, 3G, 4G and 5G mobile networks and it is even possible to use 5G NB-loT connectivity over a non-terrestrial network using a low-orbit satellite constellation.

NB-loT uses a low power network that requires Narrow Band providing better coverage levels and, as indicated, longer battery life of the devices connected thereto, lower latency and higher data transmission speed than the LoRaWAN network.

### Operation of the vehicle blocking system in docks for loading and unloading of goods:

When the blocking device (8) moves, this movement is autonomously detected, so it becomes active, the orientation, position, and location of the blocking device (8) and the distance from said blocking device (8) to the wheel (6) of the vehicle (1) to be blocked being periodically measured through their respective sensors (10, 11, 12).

Based on the values detected by the sensors (10, 11, 12), in particular, if said values are within predetermined ranges, the control unit of the receiver (13) determines a response, for which it interacts, through the user interface, with personnel intended to follow instructions or implement the measures. According to a case that will be explained later, if the measured values are within an established range, it sends this information to the receiver (13) which comprises a control and display unit that includes a user interface installed in the accesses to the loading and unloading docks (3) through which the operators access the vehicles (1). This remote receiver (13) enables the entry of authorised personnel to perform the loading or unloading operations of the vehicles (1) at the docks (3), allowing the opening of the access gate or physical barrier.

Once the blocking device (8) is installed, if it is installed incorrectly or an unwanted movement of said blocking device (8) occurs, either by a blow or by the unintentional movement of the vehicle (1), the blocking device (8) will send this data to the receiver (13) and, in response, an alarm signal will be activated which, according to an exemplary embodiment, will prevent authorised personnel from accessing the docks (3).

The blocking device (8) is powered by a power source (9), such as batteries (9) housed in its main body, having a durability of several years, due to the low consumption of the sensors (10, 11, 12).

Likewise, people who are outside the loading and unloading dock (3) can access the information on the status of each of the docks (3) from any remote location using a tablet, personal computer or smart cell phone.

From what has been explained above, it can be deduced that the sensors (10, 11, 12) capture the various parameters of the blocking device (8), and send them, either from their own transmitter included in each of the sensors (10, 11, 12), either through one or several transmitters that act for several of the sensors (10, 11, 12) in common, towards the receiver (13), so that, through the control unit, response and control actions are determined, based on the values of the measured parameters. Likewise, the interface serves to communicate said actions.

As previously indicated, various preferred embodiments are set forth below, depending on the more or less distant range of the communications network and the characteristics of the control. In all the examples, one or, preferably, several blocking devices (8) can be used, each one on one of the wheels of the vehicle (1) / trailer (2).

Thus, according to a first exemplary embodiment, both the receiver (13), as well as the control unit, and also the user interface, are arranged in the same installation of which the dock (3) is a part. In the first example, both shorter-range communication networks, such as LoRaWAN, as well as longer-range networks, such as LTE, or Narrow Band networks, e.g. NB-loT, with or without satellite, can be used. Moreover, the blocking device (8) can be available both in the dock (3) facilities, as well as being transported by the vehicle (1). In any case, once the vehicle (1) arrives at the dock (3), the sensors (10, 11, 12) of the blocking device (8) are, or are put, in communication, through the communication network, with the receiver, the control unit and the user interface. In this case, preferably, the receiver (13), the control unit and the user interface form part of a single device.

As explained before, in this first exemplary embodiment, first the receiver (13) receives the values from the sensors (10, 11, 12). Then, the control unit evaluates if said values are within or outside of predefined ranges, in other words, if the blocking devices (8) are arranged chocking the vehicle (1) correctly or incorrectly. Finally, the control unit generates commands in response to said values. According to one possibility, the response includes a combination of mechanical and luminous vibrations. For example, the blocking device (8) issues a sound, or a vibration, which are variable depending on the distance from the blocking device (8) with respect to the wheel (6); for example, it is more intense the further it is from the wheel (6), and it decreases in intensity as the blocking device (8) gets closer to the wheel (6), until it stops vibrating or sounding, when the blocking device (8) is in the correct position. Also, additionally, the blocking device (8) lights up, for example, by means of LEDs, with a colour that varies depending on whether the vehicle is correctly chocked; for example, red and green.

Likewise, in the first exemplary embodiment, which is being described, the user interface can display, on a computing device, both graphically and also, optionally, with sounds, the installation status of the blocking device (8) in accordance with that which has been explained above.

Moreover, as additional functionality, by means of a clock, which may be, for example, forming part of the control unit, or of the computer equipment in which the user interface is displayed, measurements of loading and unloading times can be recorded, which are transmitted to a receiver, preferably the cloud, for remote access, in order to estimate, optionally together with Artificial Intelligence, the times of use of the dock (3) in the future.

Moreover, according to a second exemplary embodiment, the communication network is a longer-range communication network, such as a Narrow Band (NB) network, for example, NB-loT, which generally does not allow transmission with the vehicle (1) running, optionally in cooperation with an LTE network, such as Lte-M(cat-m1), which does allow it, wherein the data from the sensors (10, 11, 12) are sent to the cloud, in other words, the receiver (13) is housed in, and/or in communication with, the cloud, so that, during the route of the vehicle (1), the user interface may display, in cooperation with a positioning system, such as GPS, whether the vehicle (1) meets or fails to meet the requirements of correct chocking. By way of an illustrative example, when the GPS detects that the vehicle has stopped in an area where it must be chocked (such as on very incline terrain, from 8%), the control unit determines if the vehicle (1) is correctly chocked and/or determines the stopping time and, where appropriate, issues a corresponding default response, through the user interface. For example, the response may include showing whether or not the vehicle is properly chocked through the computerized user interface, by means of text and/or graphics. The user interface may be located in a general logistics centre.

The second example, which is being described, is compatible with a communication network that is not necessarily in communication with the dock (3), as well as allowing the blocking devices (8) to travel together with the vehicle (1). However, it also allows an operation according to the first example, wherein the user interface is not in a logistics centre, but in the docks (3), connected with the data from the cloud. In this way, the control described for the first example can be equally carried out in the second example, receiving the data from the cloud. In this way, when the vehicle (1) is at the dock, both exemplary embodiments allow a synchronization of the information from the sensors (10, 11, 12) with the operation of the dock (3). The second example allows the use of the blocking devices (8) available on the dock (3) and those which are carried by the same vehicle (1) without distinction.

The second example also makes it possible to make dock (3) usage predictions based on measurements of loading and unloading times, with the optional help of Artificial Intelligence.

Both with the first example, as well as with the second example, the data can be transmitted to any computerized device, fixed or portable, from where the corresponding control interface shows information based on the measurements of the sensors (10, 11, 12) and evaluation of the control unit. In particular, computerized devices such as a smart light bulb to indicate that the truck is chocked, a screen, a control centre, and even a screen installed on a dump truck are considered.

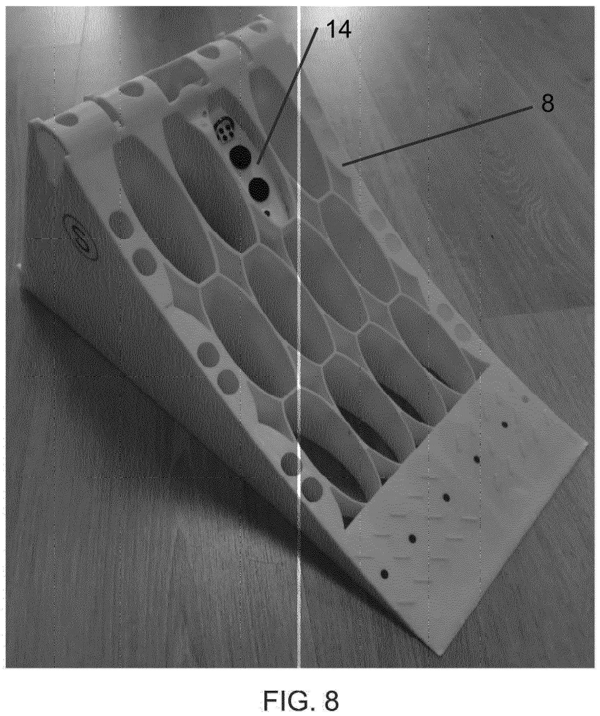

Preferably, the sensors (10, 11, 12), the power supply and the LEDs form part of a compact module (14) housed in the same blocking device (8), see Figure 8.

### List of references

- 1: Vehicle
- 2: Trailer
- 3: Dock
- 4: Leveller / bridge
- 5: Trailer box
- 6: Wheel
- 7: Platform
- 8: Blocking device
- 8A: Front face
- 8B: Support base
- 8C: Rear face
- 9: Power source
- 10: Distance sensor
- 11: Position sensor
- 12: Orientation sensor
- 13: Remote receiver
- 14: Module

## Claims

1. A vehicle blocking system (1), wherein it comprises:
i- a blocking device (8), intended to be arranged against a wheel (6) of the vehicle (1) or of a trailer (2), for blocking displacement of said vehicle (1);
ii- a plurality of sensors (10, 11, 12), located inside the blocking device (8), and comprising:
- at least one distance sensor (10) for measuring distance parameters between the blocking device and the wheel (6), and wherein the sensors (10, 11, 12) are configured to send data related to said parameters;
iii- a wide area wireless communication network (WAN) configured to transmit data from the sensors (10, 11, 12);
iv- a remote receiver (13), to receive the data from the sensors (10, 11, 12) sent through the communication network;
v- a control unit, in communication with the receiver (13), and programmed to perform an evaluation of whether the data of the parameters received by the receiver (13) are inside or outside of predetermined ranges, as well as to provide a response based on said evaluation;
vi- a user interface, for communicating to an operator the result of the evaluation; and
v- an electrical power supply (9) for powering the sensors (10, 11, 12) and the communication network,
**characterized in that**, the plurality of sensors, located inside the blocking device, further comprising:
- at least one position sensor, such as an accelerometer, for measuring position, horizontality and movement parameters of the blocking device; and
- at least one orientation sensor, for measuring orientation parameters of the blocking device.

2. The vehicle blocking system (1), according to claim 1, wherein the blocking device (8) has a main body exhibiting: a front contact face (8A) configured to come into contact with a running surface of the wheel (6); a support base (8B); a rear face (8C) and lateral faces.

3. The vehicle blocking system (1), according to claim 2, wherein the front face (8A) is configured to be suited to the curvature of the running surface of the wheel (6), for example, forming, in use, an angle with respect to the horizontal between 10° and 45°, or being a concave curved surface.

4. The vehicle blocking system (1), according to any one of claims 1 to 3, wherein the blocking device (8) is a chock (8).

5. The vehicle blocking system (1), according to any one of claims 1 to 4, wherein the at least one distance sensor (10) is arranged on the front face (8A).

6. The vehicle blocking system (1), according to any one of claims 1 to 5, wherein the at least one distance sensor (10) is selected from infrared sensors (IR) or ultrasound sensors (US).

7. The vehicle blocking system (1), according to any one of claims 1 to 6, wherein the at least one position sensor (11) is arranged on the support base (8B) of the blocking device (8).

8. The vehicle blocking system (1), according to any one of claims 1 to 7, which further includes visual or audible signaling means to warn about the correct or incorrect installation of the blocking device wherein said display means are connected to the sensors (10, 11, 12).

9. The vehicle blocking system (1), according to claim 8, wherein the signaling means are included in the blocking device (8).

10. The vehicle blocking system (1), according to any one of claims 1 to 9, wherein the blocking device (8) further includes a geographical location module (GPS) to place said blocking device (8) within a dock (3) operations area.

11. The vehicle blocking system (1), according to any one of claims 1 to 10, wherein said receiver (13) is configured as a control panel, a personal computer, a tablet or a smartphone.

12. The vehicle blocking system (1), according to claim 1, wherein the receiver (13), the control unit and the user interface are intended to be arranged in an installation of which the dock (3) is a part.

13. The vehicle blocking system (1), according to claim 12, wherein the receiver (13), the control unit and the user interface are integrated into a single device.

14. The vehicle blocking system (1), according to claim 1, wherein the communications network is configured to send the data from the sensors (10, 11, 12) to the cloud, wherein the receiver (13) is housed in, or in communication with, the cloud.

15. The vehicle blocking system (1), according to claim 14, wherein the user interface is intended to be installed in a logistics centre.

## Patentansprüche

1. Blockiersystem für ein Fahrzeug (1), wobei es Folgendes umfasst:
i- eine Blockiervorrichtung (8), die dazu bestimmt ist, gegen ein Rad (6) des Fahrzeugs (1) oder eines Anhängers (2) angeordnet zu werden, um eine Verschiebung des Fahrzeugs (1) zu blockieren;
ii- eine Vielzahl von Sensoren (10, 11, 12), die sich innerhalb der Blockiervorrichtung (8) befinden und Folgendes umfassen:
- mindestens einen Abstandssensor (10) zum Messen von Abstandsparametern zwischen der Blockiervorrichtung und dem Rad (6), wobei die Sensoren (10, 11, 12) dazu konfiguriert sind, Daten bezüglich dieser Parameter zu senden;
iii- ein drahtloses Weitbereichskommunikationsnetzwerk (WAN), das dazu konfiguriert ist, Daten von den Sensoren (10, 11, 12) zu übertragen;
iv- einen Fernempfänger (13) zum Empfangen der über das Kommunikationsnetzwerk gesendeten Daten von den Sensoren (10, 11, 12);
v- eine Steuereinheit, die mit dem Empfänger (13) in Verbindung steht und dazu programmiert ist, eine Bewertung darüber durchzuführen, ob die vom Empfänger (13) empfangenen Daten der Parameter innerhalb oder außerhalb vorbestimmter Bereiche liegen, sowie basierend auf dieser Bewertung eine Reaktion bereitzustellen;
vi- eine Benutzeroberfläche, um einem Bediener das Ergebnis der Bewertung mitzuteilen; und v- eine Stromversorgung (9) zur Versorgung der Sensoren (10, 11, 12) und des Kommunikationsnetzwerks,
**dadurch gekennzeichnet, dass** die Vielzahl von Sensoren, die sich innerhalb der Blockiervorrichtung befinden, ferner Folgendes umfasst:
- mindestens einen Positionssensor, wie etwa einen Beschleunigungsmesser, zum Messen von Positions-, Horizontalitäts- und Bewegungsparametern der Blockiervorrichtung; und
- mindestens einen Orientierungssensor zum Messen von Orientierungsparametern der Blockiervorrichtung.

2. Blockiersystem für ein Fahrzeug (1) nach Anspruch 1, wobei die Blockiervorrichtung (8) einen Hauptkörper aufweist, der Folgendes aufzeigt: eine vordere Kontaktfläche (8A), die dazu konfiguriert ist, mit einer Lauffläche des Rades (6) in Kontakt zu kommen; eine Stützbasis (8B); eine Hinterfläche (8C) und Seitenflächen.

3. Blockiersystem für ein Fahrzeug (1) nach Anspruch 2, wobei die Vorderfläche (8A) dazu konfiguriert ist, sich der Krümmung der Lauffläche des Rades (6) anzupassen, indem sie bei Verwendung beispielsweise einen Winkel in Bezug auf die Horizontale zwischen 10° und 45° bildet oder eine konkav gekrümmte Fläche ist.

4. Blockiersystem für ein Fahrzeug (1) nach einem der Ansprüche 1 bis 3, wobei die Blockiervorrichtung (8) ein Bremsklotz (8) ist.

5. Blockiersystem für ein Fahrzeug (1) nach einem der Ansprüche 1 bis 4, wobei der mindestens eine Abstandssensor (10) an der Vorderfläche (8A) angeordnet ist.

6. Blockiersystem für ein Fahrzeug (1) nach einem der Ansprüche 1 bis 5, wobei der mindestens eine Abstandssensor (10) aus Infrarotsensoren (IR) oder Ultraschallsensoren (US) ausgewählt ist.

7. Blockiersystem für ein Fahrzeug (1) nach einem der Ansprüche 1 bis 6, wobei der mindestens eine Positionssensor (11) an der Stützbasis (8B) der Blockiervorrichtung (8) angeordnet ist.

8. Blockiersystem für ein Fahrzeug (1) nach einem der Ansprüche 1 bis 7, das ferner visuelle oder akustische Signalmittel zum Warnen vor der korrekten oder nicht korrekten Installation der Blockiervorrichtung einschließt, wobei die Anzeigemittel mit den Sensoren (10, 11, 12) verbunden sind.

9. Blockiersystem für ein Fahrzeug (1) nach Anspruch 8, wobei die Signalmittel in der Blockiervorrichtung (8) eingeschlossen sind.

10. Blockiersystem für ein Fahrzeug (1) nach einem der Ansprüche 1 bis 9, wobei die Blockiervorrichtung (8) ferner ein Modul zur geografischen Ortung (GPS) einschließt, um die Blockiervorrichtung (8) innerhalb eines Betriebsbereichs der Dockingstation (3) zu platzieren.

11. Blockiersystem für ein Fahrzeug (1) nach einem der Ansprüche 1 bis 10, wobei der Empfänger (13) als Bedienfeld, PC, Tablet oder Smartphone konfiguriert ist.

12. Blockiersystem für ein Fahrzeug (1) nach Anspruch 1, wobei der Empfänger (13), die Steuereinheit und die Benutzeroberfläche dazu bestimmt sind, in einer Anlage angeordnet zu werden, zu der die Dockingstation (3) gehört.

13. Blockiersystem für ein Fahrzeug (1) nach Anspruch 12, wobei der Empfänger (13), die Steuereinheit und die Benutzeroberfläche in einer einzigen Vorrichtung integriert sind.

14. Blockiersystem für ein Fahrzeug (1) nach Anspruch 1, wobei das Kommunikationsnetzwerk dazu konfiguriert ist, die Daten von den Sensoren (10, 11, 12) an die Cloud zu senden, wobei der Empfänger (13) in der Cloud untergebracht ist oder mit dieser in Verbindung steht.

15. Blockiersystem für ein Fahrzeug (1) nach Anspruch 14, wobei die Benutzeroberfläche dazu bestimmt ist, in einem Logistikzentrum installiert zu werden.

## Revendications

1. Un système de blocage de véhicule (1), dans lequel il comprend :
i- un dispositif de blocage (8), destiné à être placé contre une roue (6) du véhicule (1) ou d'une remorque (2), afin de bloquer le déplacement dudit véhicule (1) ;
ii- une pluralité de capteurs (10, 11, 12), situé à l'intérieur du dispositif de blocage (8), et comprenant :
- au moins un capteur de distance (10) pour mesurer les paramètres de distance entre le dispositif de blocage et la roue (6), et dans lequel les capteurs (10, 11, 12) sont configurés pour transmettre des données relatives auxdits paramètres ;
iii- un réseau de communication étendu sans fil (WAN) conçu pour transmettre les données provenant des capteurs (10, 11, 12) ;
iv- un récepteur éloigné (13), pour recevoir les données provenant des capteurs (10, 11, 12) transmises via le réseau de communication ;
v- une unité de commande, en communication avec le récepteur (13), et programmé pour évaluer si les données des paramètres reçus par le récepteur (13) se situent à l'intérieur ou à l'extérieur de plages prédéterminées, ainsi que de fournir une réponse en fonction de ladite évaluation ;
vi- une interface utilisateur, pour communiquer le résultat de l'évaluation à un opérateur ; et v- une alimentation électrique (9) pour alimenter les capteurs (10, 11, 12) et le réseau de communication,
**caractérisé en ce que**, la pluralité de capteurs, situé à l'intérieur du dispositif de blocage, comprenant en outre :
- au moins un capteur de position, tel qu'un accéléromètre, pour mesurer les paramètres de position, d'horizontalité et de mouvement du dispositif de blocage ; et
- au moins un capteur d'orientation, pour mesurer les paramètres d'orientation du dispositif de blocage.

2. Le système de blocage du véhicule (1), selon la revendication 1, dans lequel le dispositif de blocage (8) a un corps principal présentant : une face de contact avant (8A) conçue pour venir en contact avec une surface de roulement de la roue (6) ; une base de support (8B) ; une face arrière (8C) et des faces latérales.

3. Le système de blocage du véhicule (1), selon la revendication 2, dans lequel la face avant (8A) est conçue pour être adapté à la courbure de la surface de roulement de la roue (6), par exemple, formant, en utilisation, un angle par rapport à l'horizontale compris entre 10° et 45°, ou ayant une surface courbe concave.

4. Le système de blocage du véhicule (1), selon l'une quelconque des revendications 1 à 3, dans lequel le dispositif de blocage (8) est une cale (8).

5. Le système de blocage du véhicule (1), selon l'une quelconque des revendications 1 à 4, dans lequel l'au moins un capteur de distance (10) est agencé sur la face avant (8A).

6. Le système de blocage du véhicule (1), selon l'une quelconque des revendications 1 à 5, dans lequel l'au moins un capteur de distance (10) est choisi parmi des capteurs infrarouges (IR) ou des capteurs à ultrasons (US).

7. Le système de blocage du véhicule (1), selon l'une quelconque des revendications 1 à 6, dans lequel l'au moins un capteur de position (11) est agencé sur la base de support (8B) du dispositif de blocage (8).

8. Le système de blocage du véhicule (1), selon l'une quelconque des revendications 1 à 7, qui comporte en outre des moyens de signalisation visuels ou sonores pour avertir si le dispositif de blocage est correctement ou incorrectement installé, lesdits moyens d'affichage étant connectés aux capteurs (10, 11, 12).

9. Le système de blocage du véhicule (1), selon la revendication 8, dans lequel les moyens de signalisation sont inclus dans le dispositif de blocage (8).

10. Le système de blocage du véhicule (1), selon l'une quelconque des revendications 1 à 9, dans lequel le dispositif de blocage (8) comporte en outre un module de localisation géographique (GPS) permettant de positionner ledit dispositif de blocage (8) dans la zone d'opération d'un quai (3).

11. Le système de blocage du véhicule (1), selon l'une quelconque des revendications 1 à 10, dans lequel ledit récepteur (13) est conçu sous la forme d'un panneau de commande, un ordinateur personnel, une tablette ou un smartphone.

12. Le système de blocage du véhicule (1), selon la revendication 1, dans lequel le récepteur (13), l'unité de commande et l'interface utilisateur sont destinées à être agencées dans une installation dont le quai (3) fait partie.

13. Le système de blocage du véhicule (1), selon la revendication 12, dans lequel le récepteur (13), l'unité de commande et l'interface utilisateur sont intégrées dans un seul appareil.

14. Le système de blocage du véhicule (1), selon la revendication 1, dans lequel le réseau de communication est configuré pour transmettre les données provenant des capteurs (10, 11, 12) vers le nuage, dans lequel le récepteur (13) est logé dans, ou en communication avec, le nuage.

15. Le système de blocage du véhicule (1), selon la revendication 14, dans lequel l'interface utilisateur est destinée à être installée dans un centre logistique.
